# EUROPEAN PATENT APPLICATION

(11) **EP 3 473 091 A1**
(43) Date of publication of application: **24.04.2019**
(21) Application number: 18201057.9
(22) Date of filing: 17.10.2018
(51) Int. Cl.: A01M 29/18

(54) **LED RAT REPELLENT LIGHT**

(30) Priority: 18.10.2017 CN 201721341700 U
(71) Applicant: Clean Concept, Vernon, CA 90058 (US)
(72) Inventor: AZRIA, Max, Los Angeles, CA California 90077 (US); HANANE, Yasmine, West Hollywood, CA California 90046 (US); MCFARLANE, Robert, Vernon, CA California 90058 (US)
(74) Representative: Boult Wade Tennant LLP

(57) **Abstract**

The present disclosure provides an LED rat repellent light, comprising a LED assembly, a rat repellent assembly and a light socket, the rat repellent assembly is arranged between the LED assembly and the light socket, and the rat repellent assembly comprises: a connecting shell, a first end of the connecting shell connected to the light socket; a middle frame; an ultrasound emitter, arranged in the connecting shell; a reflective panel, arranged in the middle frame, a first side of the reflective panel extruding towards the ultrasound emitter; ultrasound from the ultrasound emitter is reflected on the first side of the reflective panel and then passes through the opening on the middle frame. The LED rat repellent light can repel rats, mice and other rodents and also spends a high efficiency LED light.

## Description

### CROSS-REFERENCE

This application is based upon and claims the priority of Chinese Patent Application No. 201721341700.2, filed on October 18th, 2017, the entire contents of which are incorporated herein by reference.

### TECHNICAL FIELD

The present disclosure belongs to the field of LED lights, specifically to a LED rat repellent light.

### Background

LED light is a semiconductor device to convert electrons to photons by PN junctions, and emits light directly without heating process. For that LED has the properties of energy conservation, environmental protection and long life, it has been widely applied as a new kind of lighting source.

However, the LED light in the existing technology usually has a single function, therefore it cannot realize more efficiency while occupying a certain space.

### Summary

The primary object of the present disclosure is to provide a LED rat repellent light, with functions of repelling animals and LED lighting; the animals such as rats, mice, or other rodents can be effectively repelled by ultrasound from an ultrasound emitter.

The present disclosure provides a LED rat repellent light, comprising a LED assembly, a rat repellent assembly and a light socket, the rat repellent assembly is arranged between the LED assembly and the light socket, and the rat repellent assembly comprises: a connecting shell, a first end of the connecting shell connected to the light socket; a middle frame, a first end of the middle frame connected to a second end of the connecting shell, a second end of the middle frame connected to the LED assembly, at least one opening arranged on a side wall of the middle frame; an ultrasound emitter, arranged in the connecting shell, and an emitting surface of the ultrasound emitter facing the middle frame; a reflective panel, arranged in the middle frame, a first side of the reflective panel extruding towards the ultrasound emitter; ultrasound from the ultrasound emitter is reflected on the first side of the reflective panel and then passes through the opening on the middle frame.

On that account, the LED rat repellent light in a compact structure, provides functions of repelling animals and LED lighting simultaneously or alternatively, the animals such as rats, mice, other rodents, birds and mosquitoes can be repelled by ultrasound from the ultrasound emitter; with the light socket, the light can replace the existing light bulb without adding other electrical components, therefore the LED rat repellent light can be applied more easily and widely.

### Brief description of the figures

By reading the detailed description made to non-limiting embodiments referring to the following figures, the other features, objects and advantages will be more apparent.
Fig. 1 is a stereoscopic schematic view of the LED rat repellent light according to an embodiment of the present disclosure;
Fig. 2 is an explosive view of the LED rat repellent light according to the embodiment of the present disclosure;
Fig. 3 is a top view of the LED rat repellent light according to the embodiment of the present disclosure;
Fig. 4 is a cross-section view from direction A-A of Fig. 3;
Fig. 5 is a schematic view of the combination of a middle frame and a reflective panel according to the embodiment of the present disclosure;
Fig. 6 is a schematic view of the opening angle of the middle frame according to the embodiment of the present disclosure;
Fig. 7 is a schematic view of the middle frame according to the embodiment of the present disclosure;
Fig. 8 is a schematic view of the reflective panel according to the embodiment of the present disclosure;
Fig. 9 is anther schematic view of the reflective panel according to the embodiment of the present disclosure;
Fig. 10 is a cross-section view of the combination of the ultrasound emitter, the middle frame and the reflective panel according to the embodiment of the present disclosure;
Fig. 11 shows the travel path of the ultrasound from the ultrasound emitter according to the embodiment of the present disclosure;
Fig. 12 is a schematic view of the heat emission panel according to the embodiment of the present disclosure.

### Detailed description

Hereinafter, the example embodiments are described in detail with reference to the figures. However, the example embodiments can be implemented in many forms, and shouldn't be understood to be limited by the implement method described here; rather, the present disclosure can be more complete and overall by providing these embodiments and the conception of the embodiments can be transferred to the skilled in the art in the general. Same reference numbers are directed to same or similar structures, therefore repeated description of them will be omitted.

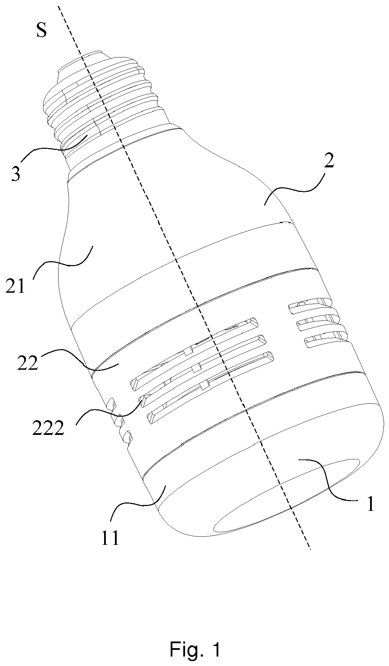

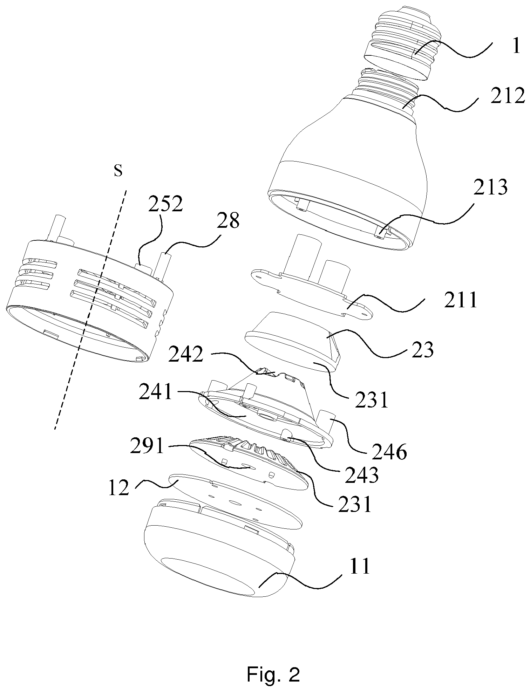

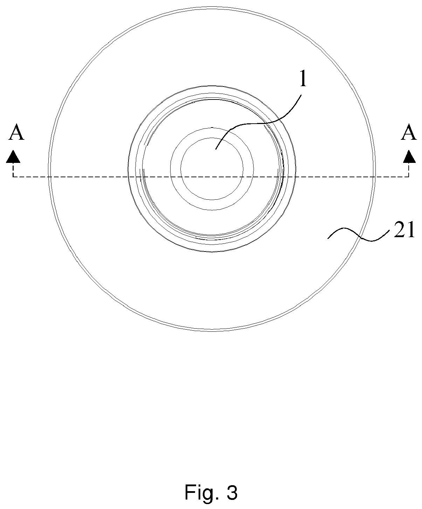

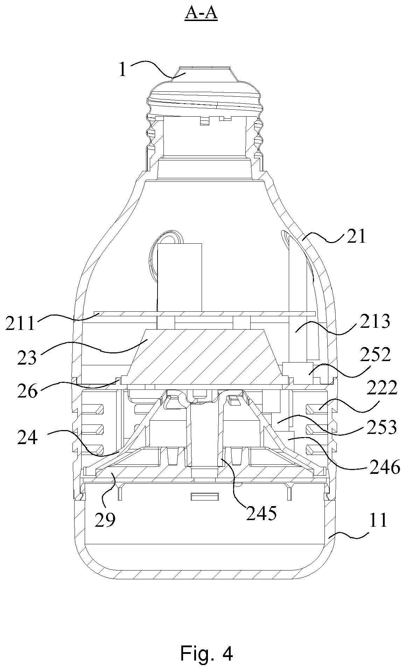

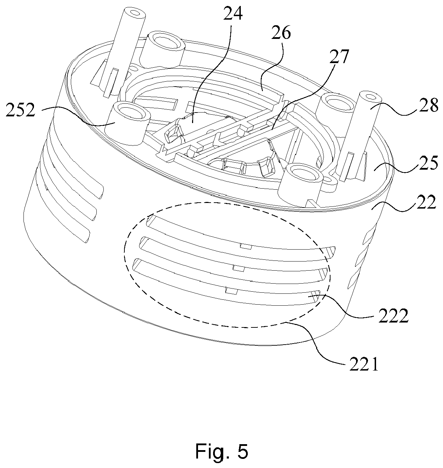

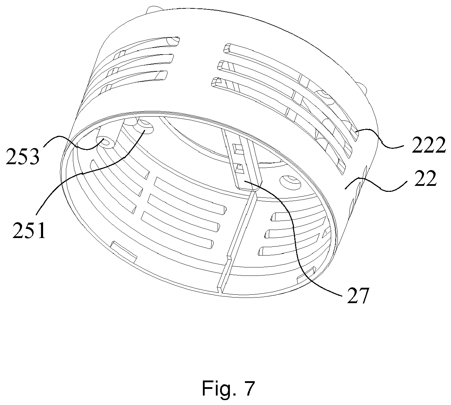

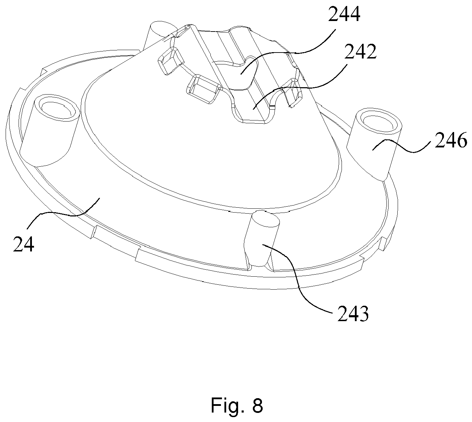

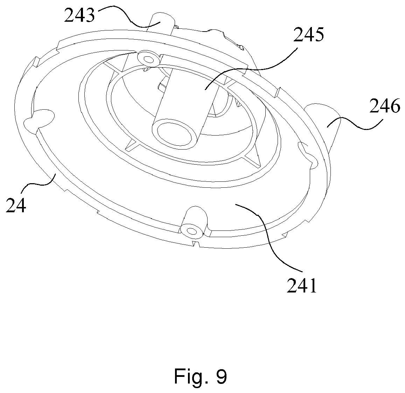

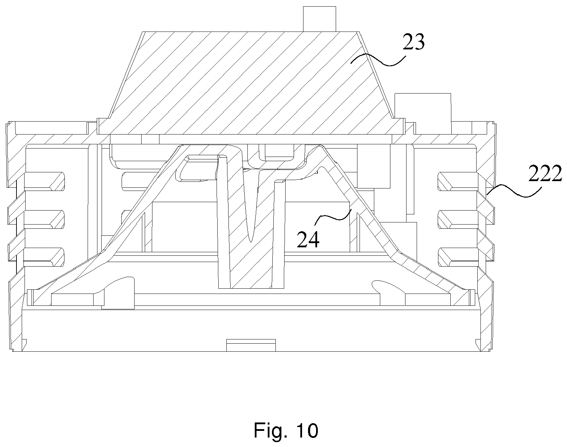

Shown in Figs. 1-12, an embodiment of the present disclosure provides a LED rat repellent light, including a LED assembly 1, a repellent assembly 2 to repel rats with ultrasound and a light socket 3. The repellent assembly 2 arranged between the LED assembly 1 and the light socket 3 includes: a connecting shell 21, a first end thereof connected to the light socket 3; a middle frame 22, a first end thereof connected to a second end of the connecting shell 21, a second end of the middle frame 22 connected to the LED assembly 1, at least one opening is arranged on a side wall of the middle frame 22, to guide the ultrasound to emit outside; an ultrasound emitter 23, arranged inside the connecting shell 21; and a reflective panel, arranged inside the connecting shell 21. The connecting shell 21 connects the middle frame 22 and the light socket 3. The connecting shell 21 and the middle frame 22 are two separate parts, or are molded in one part. The emitting surface 231 of the ultrasound emitter faces the middle frame 22, a first side of the reflective panel 24 facing the ultrasound emitter 23 extrudes towards the ultrasound emitter 23, therefore the ultrasound from the ultrasound emitter 23 is reflected by the reflective panel, and then passes through the opening 222 of the middle frame 22.

In the embodiment, the LED assembly 1 and the rat repellent assembly 2 are combined together subtly; the ultrasound emitter 23 emits ultrasound in a certain frequency, which repels some animals like rats, mice and other rodents. Therefore, the light realizes functions of LED lighting and rat repelling. For example, to repel rats, the ultrasound emitter emits ultrasound in a frequency of 20 kHz - 55 kHz. In the embodiment, the ultrasound frequency is up to 40 kHz. The light can also used to repel mosquitoes by using an ultrasound emitter in a frequency higher than 20 kHz, to imitate the sound wave of mosquitoes' enemies, such as bats, dragonfly and so on. Ultrasound higher than 20 kHz can barely heard by human ears. Therefore, the ultrasound has no influence for human.

For that ultrasound may cause certain harm for plastic pieces or circuit components. If the ultrasound emitter 23 emits the ultrasound vertically downwards, the ultrasound will directly pass through the LED assembly 1 and cause damage to the plastic pieces or circuit components therein. In the embodiment, the reflective panel 24 reflects the ultrasound to the side wall of the middle frame, to emit the ultrasound through the openings 222, rather than passing through the LED circuit board. Therefore, the LED assembly 1 can be well protected.

In the embodiment, the light socket 3 is a screw socket, such as a screw socket of E26, E27 or other models, which can be directly connected to an existing socket. Therefore, the LED rat repellent light can replace the existing LED light bulb without increasing or changing any electric components.

Further, in the embodiment, the middle frame 22 is cylindrical. A plurality of opening sections 221 are arranged on the side wall of the middle frame 22 and are distributed uniformly along the peripheral direction of the middle frame 22. The openings 222 in a same opening section 221 are sequenced along an axial direction S of the middle frame 22. In the embodiment, the LED assembly 1 and the connecting shell 21 have a same axis aligned with the axis of the middle frame 22, but the present disclosure is not limited to that. In the embodiment, four opening sections are distributed uniformly, and each opening section has three openings, to have a better rat repellent effect. In a case of long opening, a small support cylinder, connected to the upper side and the lower side of each opening 222, can be added in each opening 222. The numbers and distribution form of the opening sections 221, the numbers and distribution form of the openings 222 in each opening section 221 can be adjusted, which are all within the protection scope of the present disclosure. For example, four openings 222 are arranged in each opening section 221, or each opening 222 extends along the axial direction S.

In the embodiment, the openings 222 are formed by processing directly on the side wall of the middle frame 22. In other embodiments, a big hole is opened on the side wall of the middle frame 22 corresponding to each opening section 221, then a structural component with a plurality of openings and in a specific shape is inserted in the big hole. The structural component is an elastic plastic component and cooperates with the inner wall of the big hole, to facilitate the detachment and cleaning for users. For example, for the LED rat repellent light with four opening sections, four big holes distributed uniformly are opened up on the side wall of the middle frame, with a plastic component detachably mounted in each big hole.

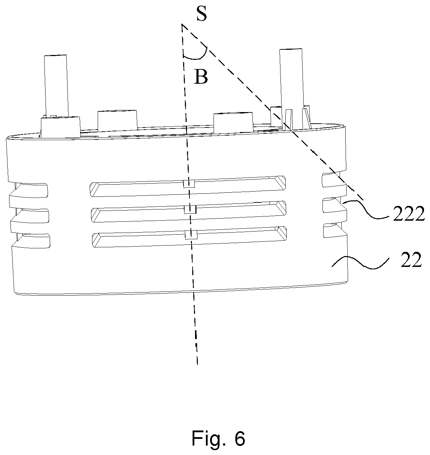

Further, the two side walls of the opening 222 along the peripheral directions of the middle frame are parallel to each other, and each side wall of the opening has an angle of 30° -60° with the axial direction S; the first side and the second side of each opening 222 extending along the peripheral direction of the middle frame, adjoins the inner surface and the outer surface of the side wall of the middle frame 22, respectively, the first side is closer to the connecting shell 21 than the second side of the opening 222. Shown in Fig. 6, the two side walls of the opening 222 refer to the upper side wall and lower side wall of the opening 222, which have an angle B of 30° -60° with the axial direction S. In a certain embodiment, the angle B is 45° . Therefore, the ultrasound from the ultrasound emitter 23 is reflected on the reflective panel, and then passes through the opening 222 to emit downwards in an angle of 45° . When the light is mounted to a high position like the ceiling through the screw socket 3, the ultrasound diffuses downwards in an angle of 45° to reach each corner of a room. In other embodiments, the angle B is not limited to 30° -60° and can be selected according to different cover areas of ultrasound.

The structure above is one of the embodiments of the present disclosure, and the scope of the present disclosure is not limited to this, other variants and combinations can also be realized. For example, when the LED rat repellent light is connected to a lower position like the ground, the upper side wall and the lower side wall of the opening 222 incline upwards, that is, the second side of the side wall of the opening 222 is closer to the connecting shell 21 than the first side. Therefore, the ultrasound is guided by each opening to diffuse upwards in a certain angle, and then reaches each corner of the room.

Further, an annular connecting panel 25 is arranged on the first end of the middle frame 22, the first side of the connecting panel 25 facing the ultrasound emitter 23 is provided with a spacing ring 26 having a same axis with the middle frame 22. The emitting surface 231 partially contacts with the connecting panel 25, and the outer surface of the ultrasound emitter 23 contacts with the inner surface of the spacing ring 26. The connecting panel 25 is molded in one part with the side wall of the middle frame 22, or, the connecting panel 25 is a signal annular panel welded with the middle frame 22. The connecting panel 25 retracts a small distance inwards compared to the side wall of the middle frame 22, but the present disclosure is not limited to this. Similarly, the spacing ring 26 is molded in one part with the connecting panel 25, or, the spacing ring 26 is a single ring welded or fastened to the connecting panel 25. The spacing ring 26 limits the position of the ultrasound emitter 23 to avoid movements in any direction. In other embodiments, the position limitation of the ultrasound emitter 23 can be realized in other methods, such as arranging a plurality of spacing cylinders to limit the position of the emitter 23.

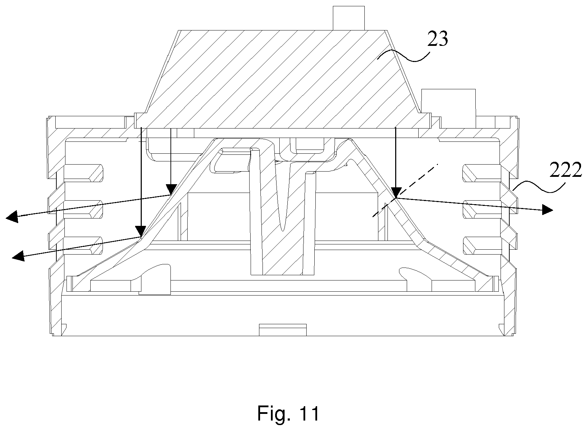

In the embodiment, a supporting rod 27 is arranged on the second side of the connecting panel 25. There is a groove 242 in the middle of the first side of the reflective panel 24. The supporting rod 27 is inserted in the groove 242, to connect the reflective panel 24 with the middle frame 22, and then limit the position of the reflective panel 24. There is a certain distance between the ultrasound emitter 23 and the reflective panel 24, and the reflective panel 24 is arranged right below the emitter 23, to reflect the ultrasound from the emitter 23 to the opening 222. The travel path of the ultrasound is shown in Fig. 11. The incline direction and incline angle of the upper and lower side walls of the opening 222 decide the emitting direction.

In the embodiment, a control board 211 arranged inside the connecting shell 21 is connected to the power supply through the light socket 3 and is connected to the ultrasound emitter 23, to control the working state of the emitter 23. The LED assembly 1 includes a light shade 11 and a LED circuit board 12 in the light shade 11. The control board 211 is connected to the LED circuit board 12 through electric wires, to control the working state of the LED light. In the embodiment, the ultrasound emitter 23 and the LED circuit board are controlled respectively. The users can choose to only open the LED light, to only open the ultrasound emitter 23 or to open the LED light and the ultrasound emitter 23 at the same time.

In the embodiment, the first side of the connecting panel 25 is provided with at least one supporting cylinders 28, which contact with the control board 211; at least one threading hole 251 is opened on the surface of the connecting panel 25, at least one threading cylinder 243 is arranged at the edge of the connecting panel 25 corresponding to the threading hole 251. The electric wires pass through the threading cylinder 243 and the threading hole 251 in turn to connect to the control board 211. In other embodiments, other threading methods can be adopted, and are without any doubt within the scope of the present disclosure. For example, the threading hole and the threading cylinder can be arranged in other positions, to guide the electric wires from the LED circuit board 12 to the control board 211, or the electric wires can pass through the middle of the light.

In the embodiment, the reflective panel 24 is a funnel extruding towards the ultrasound emitter 23. There is a cavity 241 on the second side of the reflective panel 24 facing the LED assembly 1. There is a first heat emission hole 244 opened in the middle of the reflective panel 24. In the cavity, there is a heat emission panel 29 with a second heat emission hole 291 arranged in the middle. The heat emission panel 29 has a function of heat emission for the LED assembly 1, and has another function of flattening the contact surface between the reflective panel 24 and the LED circuit board 21. The first hole 244 and the second hole 29 guarantee the air circulation in the entire LED rat repellent light. In other embodiments, more small holes can be opened around the first hole 244 to have a better heat emission effect and prolong the working hours of the light.

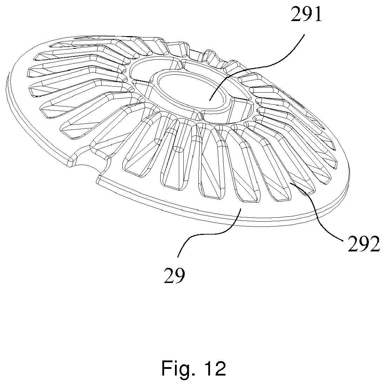

In the embodiment, a heat emission tube 245 arranged in the middle of the cavity 241 is connected to the first hole 244 and passes through the second hole 291. In other embodiments, a heat emission tube arranged on the first side of the heat emission panel 29 is connected to the second hole 291 and passes through the first hole 244. With the connection between the heat emission tube and the heat emission holes, the relative location of the reflective panel 24 and the heat emission panel 29 is limited. Further, shown in Fig. 12, the first side of the heat emission panel 24 is provided with a plurality of flanges 202, which distributed uniformly on the surface of the heat emission panel 29, and the surface of each flange at least partially contacts with the inner surface of the cavity 241, to realize a better structural cooperation between the heat emission panel 29 and the reflective panel 24. The flange 292 and the cavity 241 contact with each other directly to transfer heat from a hotter position to a colder position.

The heat emission panel 20 doesn't fully fill the cavity 241, therefore the reflective panel 24 is hollow. One role of the arrangement is to have a better heat emission effect, another role is to save materials and to have a light entire weight of the light.

Further, the panel 29 has the function of heat emission not only for the LED assembly 1, but also for the reflective panel 24. With the irradiation of the ultrasound towards the reflective panel 24 for a long time, the temperature of the panel 24 may arises for the high energy of the ultrasound. Therefore, the panel 29 also guarantees longer working hours of the rat repellent assembly 2.

In another embodiment of the present disclosure, an opening corresponding to the position of the heat emission hole is opened in the middle of the light shade. The opening connects to the heat emission hole through a connecting tube. The LED circuit board is an annular circuit board around the connecting tube. With this arrangement, the ultrasound not only emits outside through the side wall of the middle frame 22, but also emits through the emission tube 245 and the connecting tube vertically downwards. The connecting tube is formed by the materials with a good shielding effect for ultrasound, like metal, to shield the annular circuit board and the ultrasound, and then protect the LED assembly 1. Another role of the arrangement is to have a better heat emission effect for the entire light as the opening on the light shade is connected to the environment. In some cases, a cover, with no shielding effect for ultrasound, is added outside the light shade for dust prevention.

In the case that the light socket 3 is a screw socket, a screw part 212 is arranged on the first end of the connecting shell 21 to cooperate with the screw socket, and the inner thread of the screw socket cooperates with the outer thread of the screw part 212. The screw part 212 is hollow and one end opens towards the screw socket, therefore the control board 211 connects to the screw socket through electric wires passing through the screw part 212. Further, one or more threading tube extending along the axial direction S is arranged on the surface of the control board 211 facing the screw socket, the wires pass through the threading tube to connect to the electric contacts of the screw socket. With this arrangement, the light socket 3 and the connecting shell 21 are connected together or detached apart easily, to facilitate the examination and replacement of each component. In other embodiments, the connection relationship between the light socket 3 and the connecting shell 21 varies, and different variations are all within the scope of the present disclosure. For example, the light socket 3 can be welded to the connecting shell 21 directly without the screw part 212.

In other embodiments, the light socket 3 is not limited to the screw socket in the embodiment. For example, the light socket 3 is a part with a rechargeable battery inside, then the LED rat repellent light doesn't depend on external power source, and realizes the functions of lighting and rat repelling with its own power supply. In other embodiments, the light socket 3 is a regular three-phase plug or a two-phase plug, the plug connects to other parts of the LED rat repellent light through electric wires.

The inner surface of the connecting shell 21 is provided with at least one first connecting cylinder 213, the first end of the middle frame is provided with second connecting cylinders 252 in one-to-one correspondence with the first connecting cylinder 213. The first connecting cylinder 213 is inserted into corresponding second connecting cylinder 252, or vise versa, to connect the connecting shell 21 to the middle frame 22. In other embodiments, the connecting shell 21 and the middle frame 22 can also be combined with threaded connection; or the connecting shell 21 and the middle frame 22 are molded in one body. Other variations are also within the scope of the present disclosure.

The middle frame 22 is provided with at least one third connecting cylinder 253, the first side of the reflective panel 24 is provided with at least one fourth connecting cylinder 246 in one-to-one correspondence with the third connecting cylinder 253. The third connecting cylinder 253 is inserted into the corresponding fourth connecting cylinder 24, to connect the middle frame 22 with the reflective panel 24. In other embodiments, the middle frame 22 can also be fastened to the reflective panel 24 or be welded to the reflective panel 24. The middle frame 22 and the reflective panel 24 can also be molded in one body. The different variations are all within the scope of the present disclosure.

On that account, the LED rat repellent light in a compact structure, provides functions of repelling animals and LED lighting simultaneously or alternatively, the animals such as rats, mice, other rodents, birds and mosquitoes can be repelled by ultrasound from the ultrasound emitter; with the light socket, the light can replace the existing light bulb without adding other electrical components, therefore the LED rat repellent light can be applied more easily and widely.

The series of specific illustrations listed above are only specific illustrations aiming at the methods for feasibility embodiments, they are not used as a limitation to the protection scope of the present disclosure, equivalent embodiments or alterations made without being apart from the art spirit of the present disclosure should all be included in the protection scope of the present disclosure.

## Claims

1. A LED rat repellent light, comprising a LED assembly, a rat repellent assembly and a light socket, the rat repellent assembly is arranged between the LED assembly and the light socket, and the rat repellent assembly comprises:
a connecting shell, a first end of the connecting shell connected to the light socket;
a middle frame, a first end of the middle frame connected to a second end of the connecting shell, a second end of the middle frame connected to the LED assembly, at least one opening arranged on a side wall of the middle frame;
an ultrasound emitter, arranged in the connecting shell, and an emitting surface of the ultrasound emitter facing the middle frame;
a reflective panel, arranged in the middle frame, a first side of the reflective panel extruding towards the ultrasound emitter;
ultrasound from the ultrasound emitter is reflected on the first side of the reflective panel and then passes through the opening on the middle frame.

2. The LED rat repellent light according to claim 1, wherein, the middle frame is cylindrical, a plurality of opening sections are arranged on the side wall of the middle frame, and the opening sections are distributed uniformly along a peripheral direction of the middle frame;
at least one opening is arranged in each opening section, each opening extends along the peripheral direction of the middle frame, and the openings in a same opening section are sequenced along an axial direction of the middle frame.

3. The LED rat repellent light according to claim 2, wherein, two side walls of each opening extending along the peripheral direction are parallel to each other, and each side wall has an angle of 30° ∼60° with the axial direction of the middle frame;
a first side and a second side of each side wall are adjacent to the inner surface and the outer surface of the middle frame, respectively, the fist side of each side wall is closer to the connecting shell than the second side.

4. The LED rat repellent light according to claim 2, wherein, the middle frame is cylindrical, an annular connecting panel is arranged on a first end of the middle frame, a spacing ring is arranged on a first side of the connecting panel facing the ultrasound emitter, the emitting surface of the ultrasound emitter partially contacts with the connecting panel, and the outer surface of the ultrasound emitter contacts with the inner surface of the spacing ring.

5. The LED rat repellent light according to claim 4, wherein, a supporting rod is arranged on a second side of the connecting panel, a groove is arranged in the middle of the first side of the reflective panel, the supporting rod is inserted into the groove.

6. The LED rat repellent light according to claim 1, wherein, a control board is arranged in the connecting shell, the control board is connected to a power source through the light socket, the control board is further connected to the ultrasound emitter;
the LED assembly further comprises a light shade and a LED circuit board arranged in the light shade, the LED circuit board is connected to the control board through electric wires;
the middle frame is cylindrical, an annular connecting panel is arranged on the first end of the middle frame, at least one supporting cylinder is arranged on the first side of the connecting panel facing the ultrasound emitter, the supporting cylinder contacts with the control board.

7. The LED rat repellent light according to claim 6, wherein, at least one threading hole is arranged on the connecting panel, at least one threading cylinder is arranged on an edge of the reflective panel, the threading cylinder and the threading hole are in one-to-one correspondence, and the electric wires pass through the threading cylinder and threading hole in turn to connect to the control board.

8. The LED rat repellent light according to claim 1, wherein, the reflective panel is a funnel extruding towards the ultrasound emitter, a cavity is formed on a second side of the reflective panel, a first heat emission hole is opened in the middle of the reflective panel, a heat emission panel is arranged in the cavity, and a second heat emission hole is opened in the middle of the heat emission panel.

9. The LED rat repellent light according to claim 8, wherein, a heat emission tube arranged in the middle of the cavity is connected to the first heat emission hole, and passes through the second heat emission hole; or a heat emission tube arranged on the heat emission panel is connected to the second heat emission hole, and passes through the first heat emission hole.

10. The LED rat repellent light according to claim 8, wherein, a plurality of flanges are formed uniformly on a first side of the heat emission panel, and surfaces of the flanges at least partially fit closely to the inner surface of the cavity;
the LED assembly comprises a light shade and a LED circuit board in the light shade, a second side of the heat emission panel fits closely to the LED circuit board.

11. The LED rat repellent light according to claim 10, wherein, an opening corresponding to the position of the heat emission hole is arranged in the middle of the light shade, a connecting tube is arrange to connect the opening in the light shade to the heat emission hole; the LED circuit board is an annular circuit board shelters part of the connecting tube.

12. The LED rat repellent light according to claim 1, wherein, the light socket comprises a screw socket, the first end of the connecting shell comprises a screw part cooperates with the screw socket, the screw socket shelters the screw part, and an inner cavity of the screw part is connected with an inner cavity of the screw socket.

13. The LED rat repellent light according to claim 1, wherein, at least one first connecting cylinder is arranged in the connecting shell, at least one second connecting cylinder in one-to-one correspondence with the first connecting cylinder is arranged on the first end of the middle frame, the first connecting cylinder is inserted in the second connecting cylinder, or the second connecting cylinder is inserted in the first connecting cylinder.

14. The LED rat repellent light according to claim 1, wherein, at least one third connecting cylinder is arranged in the middle frame, at least one fourth connecting cylinder in one-to-one correspondence with the third connecting cylinder is arranged on the first side of the reflective panel, the third connecting cylinder is inserted in the third connecting cylinder, or the third connecting cylinder is inserted in the fourth connecting cylinder.
